# EUROPÄISCHE PATENTSCHRIFT

(11) **EP 1 195 531 B1**
(45) Veröffentlichungstag und Bekanntmachung des Hinweises auf die Patenterteilung: **23.07.2003**
(21) Anmeldenummer: 01122898.8
(22) Anmeldetag: 25.09.2001
(51) Int. Cl.: F16B 2/08, F16L 33/04

(54) **Schellenband**
Clamp band
Collier de serrage de type bandes

(30) Priorität: 04.10.2000 DE 10048955
(43) Veröffentlichungstag der Anmeldung: 10.04.2002
(73) Patentinhaber: Rasmussen GmbH, 63477 Maintal (DE)
(72) Erfinder: Anthes, Steffen, 63225 Langen (DE); Stichel, Willi, 63477 Maintal (DE); Wachter, Gerhard, 63654 Büdingen (DE); Mann, Stephan, 63599 Bierber (DE)
(74) Vertreter: Knoblauch, Andreas, Dr.-Ing.

(56) Entgegenhaltungen:
- EP-A- 0 777 075
- DE-A- 4 309 565
- DE-U- 1 717 978
- US-A- 4 299 012
- US-A- 4 521 940

## Beschreibung

Die Erfindung bezieht sich auf ein Schellenband aus Stahl, mit wenigstens einem Paar von Endabschnitten, die jeweils wenigstens einen geschlossenen Längsschlitz zur Durchführung einer einen Kopf aufweisenden Spannschraube aufweisen und zu Schlaufen gebogen sind, deren Schenkel nahe bei dem freien Ende des einen Schenkels verbunden sind und die der Aufnahme jeweils eines von zwei über zumindest einen Teil ihres Umfangs zylindrischen Spannstücken dienen, von denen das eine Spannstück eine quer durchgehende Öffnung ohne Gewinde zur freien Durchführung des Gewindeschafts der Spannschraube und das andere Spannstück eine quer durchgehende Öffnung mit Gewinde für den Eingriff des Gewindeschafts der Spannschraube aufweist, wobei der eine Schenkel jeder Schlaufe mit wenigstens einem Laschenpaar versehen ist, dessen Laschen freigeschnitten und aus der Schenkelebene herausgebogen sind, durch Löcher des anderen Schenkels der Schlaufe ragen und auf die eine Seite des anderen Schenkels quer zu dessen Längsrichtung und entgegengesetzt zueinander umgebogen sind.

Bei einem solchen Schellenband, wie es beispielsweise aus einer der deutschen Patentschriften DE-C1-198 22 915, DE-C2-37 29 372, DE-C1-37 10 852, DE-C1-198 00 283 oder der deutschen Offenlegungsschrift DE-A1-39 26 626 bekannt ist, werden die Schlaufenschenkel miteinander durch Punktschweißungen verbunden. Um eine solche Schweißverbindung haltbar herzustellen, besteht das Schellenband aus Edelstahl. Edelstahl ist ein kostspieliges Material. Dennoch besteht an den Schweißstellen Korrosionsgefahr. Preisgünstiger wäre ein vorverzinktes Schellenband, das beispielsweise mit einer Legierung aus Aluminium und Zink beschichtet ist. Ein derart behandeltes Schellenband läßt sich jedoch nicht schweißen.

Aus der DE-A1-43 09 565 ist ein Schellenband der eingangs beschriebenen Art bekannt. Bei diesem Schellenband kommt man ohne Schweißung aus, weil die Verbindung der zurückgebogenen Schenkel mit dem an die Schlaufen angrenzenden Teil des Schellenbands nur formschlüssig ist. Desgleichen braucht kein Edelstahl für das Stahlband verwendet zu werden. Vielmehr genügt einfacher Stahl, der durch eine Beschichtung korrosionsfest ausgebildet ist. Ferner werden die sich quer zur Längsrichtung des Schellenbands erstreckenden Laschen durch die Anlage an den Rändern der Löcher nur auf Schub und nicht auf Biegung beansprucht. Die formschlüssige Verbindung hält auf diese Weise hohen Belastungen stand. Nach dem Umbiegen der Laschen verbleiben in der Nähe der freien Enden der mit den Laschen versehenen Schenkel jedoch etwa viereckige Löcher. Daher erstrecken sich quer über die gesamte Schellenbandbreite entsprechende, in Längsrichtung des Schellenbands relativ breite Endbereiche des Schellenbands zwischen diesen Löchern und den freien Enden der Schenkel.

Der Erfindung liegt die Aufgabe zugrunde, ein Schellenband der eingangs genannten Art anzugeben, das bei hoher Belastbarkeit der Schlaufen durch Spannkräfte auf einfache Weise und preisgünstiger herstellbar ist.

Erfindungsgemäß ist diese Aufgabe dadurch gelöst, daß jeder die Laschen aufweisende Schlaufenschenkel-Endabschnitt auf eine geringere Breite als der übrige Teil des Schellenbands bis zum Ansatz der Laschen zurückgeschnitten ist, so daß das Schellenband Querkanten aufweist.

Bei dieser Ausbildung entfallen die Endbereiche der umgebogenen Schenkel. Das Schellenband kann daher insgesamt kürzer und folglich mit geringerem Materialaufwand ausgebildet werden.

Eine mögliche Ausbildung besteht darin, daß der eine Schenkel jeder Schlaufe mit wenigsten einem aus der Schenkelebene vorstehenden Vorsprung versehen ist, der oder die in ein Loch oder Löcher des anderen Schenkels der Schlaufe ragt bzw. ragen, und daß der die Laschen oder zusätzlich den oder die Vorsprünge aufweisende Schenkel jeder Schlaufe an der radial inneren Seite des Schellenbands in einer etwa kreisförmigen Schelle anliegt. Hierbei kann die Ausbildung der Löcher gleichzeitig beim Zuschneiden des Schellenbands aus einem längeren Materialband durch Stanzen erfolgen. Die Vorsprünge können auf einfache Weise aus dem Schellenband geformt und in die Löcher eingeführt werden. Der die Vorsprünge aufweisende Endabschnitt des radial inneren Schlaufenschenkels wird dann beim Spannen der Schelle gegen die Innenseite des anderen Schlaufenschenkels gedrückt. Dadurch entsteht zusätzlich ein Reibschluß zwischen den Schlaufenschenkeln, der die Festigkeit der Verbindung der Schlaufenschenkel erhöht.

Sodann ist es günstig, wenn die Laschen in Richtung von der Längsmittelachse des Schellenbands weg umgebogen sind und die die Laschen aufnehmenden Löcher quer zur Längsrichtung des Schellenbands breiter sind als das Schellenband dick ist und die Laschen jedes Laschenpaares sich von ihrem Ansatz aus bis zu der Schenkelseite, auf die sie umgebogen sind, schräg zur Bandebene erstrecken. Bei dieser Ausbildung ergibt sich eine relativ große Berührungsfläche zwischen den Rändern der Löcher und der Laschen im Vergleich zu einer Ausbildung, bei der sich die Ränder der Löcher und Laschen im rechten Winkel kreuzen.

Eine weitere vorteilhafte Weiterbildung besteht darin, daß sich in einer zur Bandebene senkrechten Mittelebene des Schellenbands in der Nähe der Löcher jedes ein Laschenpaar aufnehmenden Lochpaares eine konkave Sicke in Längsrichtung des Schellenbands erstreckt, in deren Hohlraum ein Endabschnitt des zurückgebogenen Schlaufenschenkels bündig eingreift. Hierbei ergibt sich ein weitgehend stetiger Übergang zwischen den Querkanten des die Laschen aufweisenden Endabschnitts des radial inneren Schlaufenschenkels und der Innenseite des übrigen Teils des Schellenbands. Bei Verwendung einer das Schellenband aufweisenden Schelle zum Festspannen eines Schlauches auf einem Rohrstutzen wird daher weitgehend die Gefahr vermieden, daß ein stufenartiger Übergang des Innendurchmessers der Schelle im Bereich der Querkanten auftritt, so daß eine weitgehend gleichförmig über den Umfang des Schlauches durch die Schelle ausgeübte Spannkraft und demzufolge eine hohe Dichtigkeit der Verbindung zwischen Schlauch und Rohrstutzen sichergestellt ist. Gleichzeitig sind Verletzungen des Schlauches durch derartige Kanten vermieden.

Diese Ausbildung kann in der Weise ausgestaltet sein, daß sich die Sicke zwischen den Löchern jedes ein Lochpaar aufnehmenden Lochpaares erstreckt und das Material des radial äußeren Schlaufenschenkels bei zur Schelle geformtem Schellenband neben den Längsseiten der Sicke radial nach innen gegenüber dem Umriß der Sicke und des Schellenbands vorsteht, wobei es an den Querkanten entsprechend der Dicke des Schellenbands vorsteht und von diesen Querkanten aus in Längsrichtung der Sicke in bis zu jenem Umriß abnehmendem Maße vorsteht.

Besonders vorteilhaft und haltbar ist eine Ausbildung, bei der wenigstens einer der Vorsprünge als Durchzug ausgebildet ist, der auf der einen Seite des anderen Schenkels vernietet oder verstemmt ist.

Alternativ können die Vorsprünge etwa topf- oder nasenförmig ausgebildet sein.

Die Erfindung und ihre Weiterbildungen werden nachstehend anhand der beigefügten Zeichnung bevorzugter Ausführungsbeispiele näher beschrieben. Es zeigen:
- Fig. 1: eine Seitenansicht einer Schelle mit einem erfindungsgemäßen Schellenband,
- Fig. 2: eine axiale Ansicht der Schelle nach Fig. 1,
- Fig. 3: eine perspektivische Ansicht des Schellenbands der Schelle nach Fig. 1,
- Fig. 4: den Schnitt IV-IV durch das Schellenband nach Fig. 3 in vergrößertem Maßstab,
- Fig. 5: eine Abwandlung des Schellenbands nach den Fig. 1 bis 4,
- Fig. 6: eine weitere Abwandlung des Schellenbands nach den Fig. 1 bis 4,
- Fig. 7: eine weitere Abwandlung des Schellenbands nach den Fig. 1 bis 4,
- Fig. 8: eine vergrößerte Draufsicht auf einen Endabschnitt eines Schlaufenschenkels des Schellenbands nach Fig. 7 im unverformten Zustand,
- Fig. 9: den Schnitt IX-IX des Schellenbands nach Fig. 7 in vergrößertem Maßstab,
- Fig. 10: einen vergrößerten Ausschnitt einer Seitenansicht des Schellenbands nach Fig. 7,
- Fig. 11: eine weitere Abwandlung des Schellenbands nach den Fig. 1 bis 4,
- Fig. 12: eine vergrößerte Draufsicht auf einen Endabschnitt eines Schlaufenschenkels des Schellenbands nach Fig. 11 mit einem herausgedrückten Vorsprung vor der Verformung seiner Laschen,
- Fig. 13: den Schnitt XIII-XIII der Fig. 11 in vergrößertem Maßstab,
- Fig. 14: einen vergrößerten Ausschnitt einer Seitenansicht des Schellenbands nach Fig. 11,
- Fig. 15: eine Abwandlung des in Fig. 12 dargestellten Endabschnitts,
- Fig. 16: einen vergrößerten Ausschnitt einer Seitenansicht eines Schellenbands mit der Abwandlung nach Fig. 15,
- Fig. 17: einen Längsschnitt durch den Ausschnitt nach Fig. 16 und
- Fig. 18: einen vergrößerten Ausschnitt eines Längsschnitts durch ein abgewandeltes Schellenband nach Fig. 11.

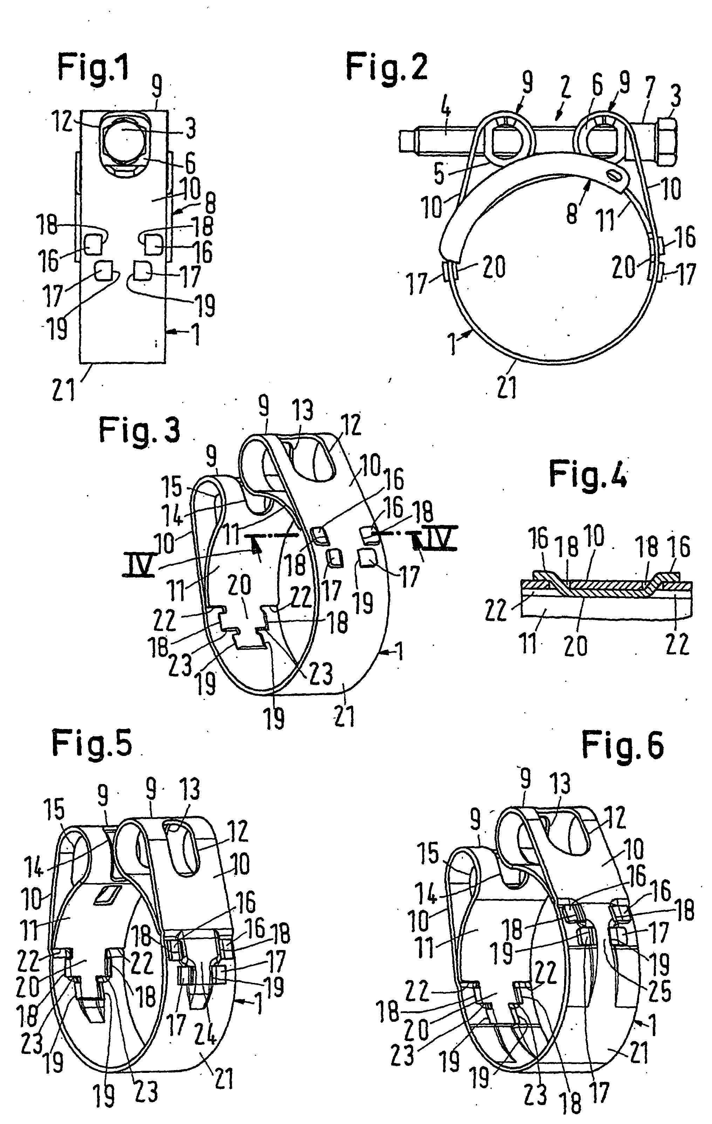

Die Schelle nach den Fig. 1 und 2 besteht aus einem erfindungsgemäßen mit einer korrosionsfesten Beschichtung versehenen Schellenband 1 aus Stahl, einer Spannschraube 2 mit einem Kopf 3 und einem Gewindeschaft 4, zwei weitgehend hülsenförmigen Spannstücken 5 und 6, die auch als zumindest teilweise zylindrische Bolzen ausgebildet sein können, einer den Gewindeschaft 4 zwischen Kopf 3 und Spannstück 6 umgebenden Hülse 7 und einer den Spalt zwischen den Enden des Schellenbands 1 überbrückenden Lasche 8.

Das Schellenband 1 hat ein Paar von Endabschnitten, kann aber auch im Falle einer aus zwei durch zwei Spannschrauben verbundenen Hälften einer Schelle zwei Paare von Endabschnitten aufweisen, die jeweils zu Schlaufen 9 gebogen sind, deren Schenkel 10, 11 nahe bei dem freien Ende des einen Schenkels 11 verbunden sind. Die Schlaufen 9 haben jeweils zwei ringsum geschlossene Längsschlitze 12, 13 bzw. 14, 15 zur Durchführung der Spannschraube 2. Die Stege zwischen den Schlitzen 12, 13 bzw. 14, 15 jeder Schlaufe 9 können aber auch entfallen, so daß die Schlaufen 9 jeweils nur einen Schlitz aufweisen. Die Schlaufen 9 umschließen teilweise jeweils eines der beiden Spannstücke 6, 5, die über einen Teil ihres Umfangs zylindrisch sind, aber auch vollständig zylindrisch sein können. Das Spannstück 6 hat eine (nicht dargestellte) quer durchgehende Öffnung ohne Gewinde zur freien Durchführung des Gewindeschafts 4 der Spannschraube 2 und das andere Spannstück 5 eine quer durchgehende Öffnung mit Gewinde für den Eingriff des Gewindeschafts 4.

Die Verbindung der Schenkel 10, 11 jeder Schlaufe 9 ist formschlüssig. Die Verbindung besteht darin, daß der eine Schenkel 11 jeder Schlaufe 9 mit freigeschnittenen und aus der Schenkelebene herausgebogenen Laschen 16, 17 versehen ist, die durch Löcher 18, 19 des anderen Schenkels 10 der Schlaufe 9 ragen und auf die eine Seite des anderen Schenkels 10 umgebogen sind.

Der die Laschen 16, 17 aufweisende zurückgebogene Schenkel 11 jeder Schlaufe 9 liegt an der radial inneren Seite des Schellenbands 1 in einer kreisförmigen Schelle an.

Es ist wenigstens ein Laschenpaar 16 und/oder 17 vorgesehen, dessen Laschen 16, 17 entgegengesetzt zueinander in Richtung von der Längsmittelachse des Schellenbands 1 zu den Längsrändern des Schellenbands 1 umgebogen sind.

Die Löcher 18, 19 sind quer zur Längsrichtung des Schellenbands 1 breiter als das Schellenband 1 dick ist, und die Laschen 16, 17 jedes Laschenpaares 16 bzw. 17 erstrecken sich von ihrem Ansatz aus bis zu derjenigen Schenkelseite, auf die sie umgebogen sind, schräg zur Bandebene, wie es in Fig. 4 dargestellt ist.

Das Schellenband 1 nach den Fig. 1 bis 4 kann aus einem kostengünstigen Stahl hergestellt sein, der mit einer korrosionfesten Schicht überzogen ist, vorzugsweise einer Aluminium-Zink-Legierung. Da sich bei einem derartigen Schellenband 1 die Schlaufenschenkel 10, 11 nicht durch eine Punktschweißung verbinden lassen, sind sie durch die Laschen 16, 17 und Löcher 18, 19 formschlüssig verbunden.

Die formschlüssige Verbindung der Schlaufenschenkel 10, 11 nach den Fig. 1 bis 4 ist aus mehreren Gründen mindestens ebenso hoch belastbar wie eine Schweißverbindung. So hat die Durchführung der Laschen 16, 17 von innen nach außen durch die Löcher 18, 19 den Vorteil, daß zumindest die die Laschen 16, 17 aufweisenden Endabschnitte 20 der inneren Schlaufenschenkel 11 an den Innenseiten der Schlaufenschenkel 10 anliegen und dadurch beim Spannen des Schellenbands um einen auf einen Rohrstutzen geschobenen Schlauch gegen die Innenseiten der Schlaufenschenkel 10 gedrückt und dadurch die Schlaufenschenkel 11 zusätzlich reibschlüssig mit den Schlaufenschenkeln 10 verbunden werden. Während sich die inneren Schlaufenschenkel 11 beim Spannen des Schellenbands dem Umkreis des Schlauches eng anpassen, geht der äußere Schlaufenschenkel 10 tangential in den Umfang des etwa kreisförmig zur Schelle gebogenen Abschnitts 21 des Schellenbands über, ohne die formschlüssige Verbindung zwischen den Laschen 16, 17 und Löchern 18, 19 radial zu belasten und dadurch die inneren Schlaufenschenkel 11 vom Schlauch abzuheben, was die Dichtigkeit der Anlage zwischen Schlauch und Rohrstutzen beeinträchtigen würde. Da die Laschen 16, 17 quer zur Längsachse des Schellenbands 1 zu den Rändern des Schellenbands hin umgebogen sind, werden sie nicht auf Biegung, sondern nur auf Schub durch die Ränder der Löcher 18, 19 belastet. Die Gefahr einer Aufbiegung der Laschen 16, 17 beim Spannen der Schelle wird auf diese Weise vermieden.

Der in Fig. 4 dargestellte schräge Verlauf der Laschen 16 durch die breiter als die Banddicke ausgebildeten Löcher 18 - die Laschen 17 und die Löcher 19 sind ebenso ausgebildet - ergibt eine größere Berührungsfläche zwischen den Rändern der Laschen 16 und Löcher 18 beziehungsweise der Laschen 17 und Löcher 19 und damit eine geringere Flächenpressung zwischen diesen Rändern, so daß die formschlüssige Verbindung auch aus diesem Grunde hohen Spannkräften standhält.

Die Schellenbänder 1 nach den Fig. 5 und 6 unterscheiden sich von dem nach den Fig. 1 bis 4 dadurch, daß sich zwischen den Löchern 18, 19 jedes ein Laschenpaar 16, 17 aufweisenden Lochpaares 18, 19 eine Sicke 24, 25 in Längsrichtung des Schellenbands 1 erstreckt und das Material des radial äußeren Schlaufenschenkels 10 bei zur Schelle geformtem Schellenband 1 neben den Längsseiten der jeweiligen Sicke 24 bzw. 25 gegenüber dem Umriß der Sicke 24 bzw. 25 und des Schellenbands 1 radial nach innen vorsteht, wobei es an den Querkanten 22, 23 entsprechend der Dicke des Schellenbands 1 vorsteht und von diesen Querkanten 22, 23 aus in Längsrichtung der Sicke 24 bzw. 25 in bis zu jenem Umriß abnehmendem Maße vorsteht.

Die Schellenbänder 1 nach den Fig. 5 und 6 unterscheiden sich nur hinsichtlich der Ausbildung der Sicken 24 und 25. So ist die Sicke 24 im Schellenband 1 nach Fig. 5 in der Weise ausgebildet, daß das Material des Schellenbands 1 im Bereich der Sicke 24 und in dem zur Biegung (dem freien Ende) der Schlaufe 9 hin angrenzenden Bereich des Schlaufenschenkels 10 radial nach außen gedrückt ist, während das Material des Schellenbands 1 nach Fig. 6 seitlich neben der Sicke 25 radial nach innen gedrückt ist. Dabei behält das Schellenband 1 nach Fig. 5 neben der Sicke 24 die Kreisform bei, während das Schellenband 1 nach Fig. 6 neben der Sicke 25 von den Querkanten 22 bzw. 23 aus stetig in die Kreisform des Abschnitts 21 übergeht. In beiden Fällen nimmt die Sicke 24 bzw. 25 den Endabschnitt 20 in ihrer Wölbung auf.

Diese Formgebung des Schellenbands 1 nach den Fig. 5 und 6 hat den Vorteil, daß die Innenfläche der Schelle außerhalb des Spalts zwischen den freien Enden der Schlaufen 9 eine nahezu stetige Zylinderform hat, so daß die durch die Spannschraube 2 über die Schlaufen 9 und den kreisförmigen Abschnitt 21 des Schellenbands 1 sowie die (auch "Brücke" genannte) Lasche 8 auf einen auf einem Rohrstutzen festzuklemmenden Schlauch ausgeübte radiale Spannkraft nahezu gleichförmig über den Schlauchumfang verteilt ist, ohne daß die Spannkraft in den an die Querkanten 22, 23 anschließenden Bereichen stark unterschiedlich ist.

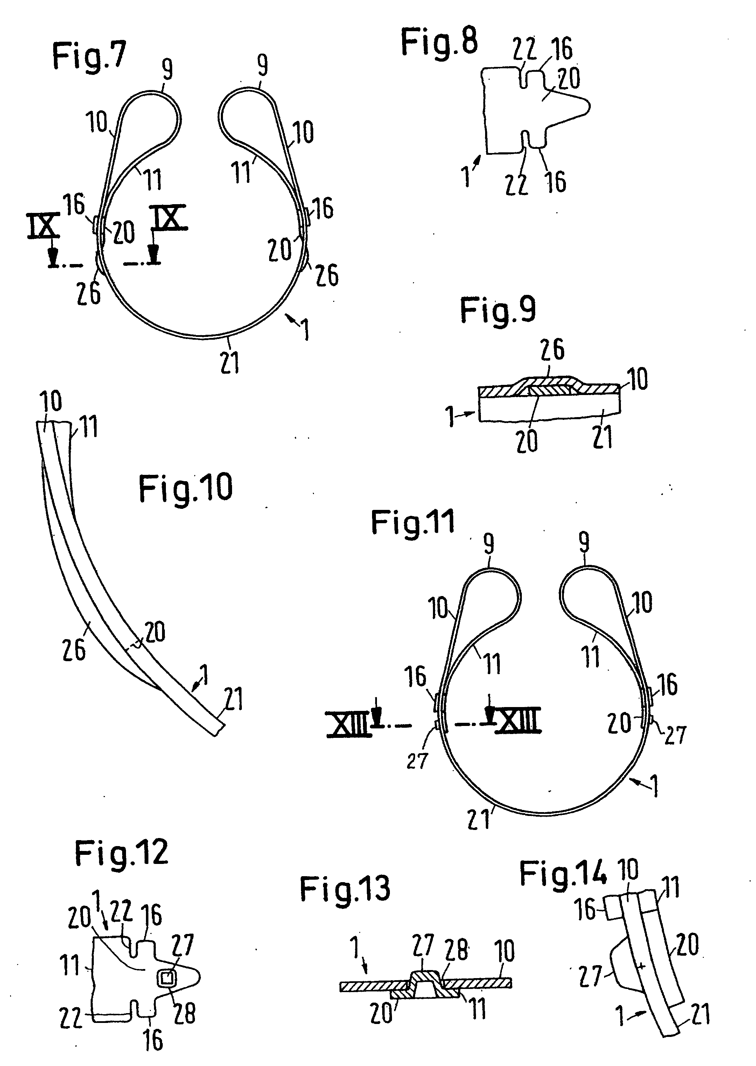

Das Schellenband nach den Fig. 7 bis 10 unterscheidet sich von dem nach den Fig. 1 bis 4 darin, daß die Laschen 17 und die zugehörigen Löcher 19 weggelassen sind, sich der Endabschnitt 20 der zurückgebogenen Schlaufenschenkel 11 zu seinem freien Ende hin verjüngt und bündig in einer konkaven Sicke 26 aufgenommen ist, die sich in einer zur Bandebene senkrechten Mittelebene des Schellenbands 1 in der Nähe der (in Fig. 7 nicht sichtbaren) Löcher 18 des Laschenpaares 16 erstreckt. Der Wegfall der Laschen 17 und Löcher 19 ist möglich, wenn das Schellenband 1 keinen hohen Belastungen ausgesetzt ist. Der bündige Eingriff des Endabschnitts 20 in die Sicke 26 (siehe insbesondere Fig. 9) verhindert ebenfalls einen stufenförmigen Übergang zwischen dem freien Ende des Endabschnitts 20 und der Innenseite des Schellenbands 1.

Das Schellenband 1 nach den Fig. 11 bis 14 unterscheidet sich von dem nach den Fig. 7 bis 10 darin, daß die Sicke 26 weggelassen und der Endabschnitt 20 mit einem radial nach außen gedrückten topfförmigen Vorsprung 27 versehen ist, der durch ein Loch 28 im Schlaufenschenkel 10 gemäß Fig. 13 hindurchgeführt und darin reibschlüssig festgehalten ist.

Statt topfförmig kann der Vorsprung 27 auch brückenförmig ausgebildet sein, indem in den Endabschnitt 20 zwei parallele quer verlaufende Einschnitte ausgeführt werden und der Steg zwischen den Einschnitten herausgedrückt wird.

Statt nur eines Vorsprungs 27 und Loches 28 können auch mehrere, z.B. zwei, Vorsprünge 27 und Löcher 28 vorgesehen sein.

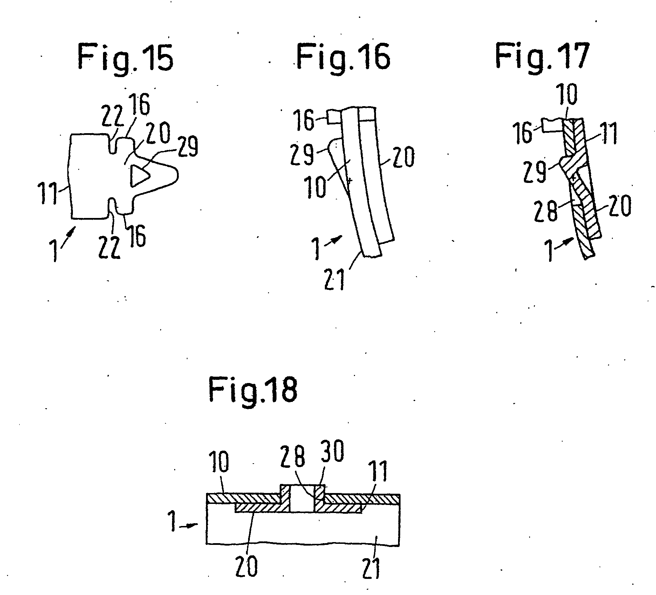

Die Abwandlung des Schellenbands 1 nach den Fig. 15 bis 17 unterscheidet sich von der nach den Fig. 11 bis 14 lediglich dadurch, daß anstelle des topfförmigen Vorsprungs 27 ein etwa nasenförmiger Vorsprung 29 durch das Loch 28 ragt. Auch in diesem Falle können mehrere Löcher 28 und nasenförmige Vorsprünge 29 in den Schenkeln 10 und 11 vorgesehen sein.

Bei der in Fig. 18 dargestellten Abwandlung des Schellenbands nach den Fig. 11 bis 14 ist anstelle des topfförmigen Vorsprungs 27 ein Vorsprung in Form eines Durchzugs 30 im Endabschnitt 20 des zurückgebogenen Schlaufenschenkels 11 ausgebildet, durch das Loch 28 hindurchgeführt und am radial äußeren Ende durch Verstemmen oder Vernieten aufgeweitet. Auch in diesem Falle können mehrere solche Durchzüge 30 und zugehörige Löcher vorgesehen sein.

## Patentansprüche

1. Schellenband (1) aus Stahl, mit wenigstens einem Paar von Endabschnitten, die jeweils wenigstens einen geschlossenen Längsschlitz (12, 15) zur Durchführung einer einen Kopf (3) aufweisenden Spannschraube (2) aufweisen und zu Schlaufen (9) gebogen sind, deren Schenkel (10, 11) nahe bei dem freien Ende des einen Schenkels (11) verbunden sind und die der Aufnahme jeweils eines von zwei über zumindest einen Teil ihres Umfangs zylindrischen Spannstücken (5, 6) dienen, von denen das eine Spannstück (5) eine quer durchgehende Öffnung ohne Gewinde zur freien Durchführung des Gewindeschafts (4) der Spannschraube (2) und das andere Spannstück (6) eine quer durchgehende Öffnung mit Gewinde für den Eingriff des Gewindeschafts (4) der Spannschraube (2) aufweist, wobei der eine Schenkel (11) jeder Schlaufe (9) mit wenigstens einem Laschenpaar (16; 17) versehen ist, dessen Laschen freigeschnitten und aus der Schenkelebene herausgebogen sind, die durch Löcher (18, 19) des anderen Schenkels (10) der Schlaufe (9) ragen und auf die eine Seite des anderen Schenkels (10) quer zu dessen Längsrichtung und entgegengesetzt zueinander umgebogen sind, **dadurch gekennzeichnet, daß** jeder die Laschen (16, 17) aufweisende Schlaufenschenkel-Endabschnitt (20) auf eine geringere Breite als der übrige Teil (21) des Schellenbands (1) bis zum Ansatz der Laschen (16, 17) zurückgeschnitten ist, so daß das Schellenband (1) Querkanten (22, 23) aufweist.

2. Schellenband nach Anspruch 1, **dadurch gekennzeichnet, daß** der eine Schenkel (11) jeder Schlaufe (9) mit wenigsten einem aus der Schenkelebene vorstehenden Vorsprung (27, 29; 30) versehen ist, der oder die in ein Loch oder Löcher (28) des anderen Schenkels (10) der Schlaufe (9) ragt bzw. ragen, und daß der die Laschen (16; 17) oder zusätzlich den oder die Vorsprünge (27; 29; 30) aufweisende Schenkel (11) jeder Schlaufe (9) an der radial inneren Seite des Schellenbands (1) in einer etwa kreisförmigen Schelle anliegt.

3. Schellenband nach Anspruch 1 oder 2, **dadurch gekennzeichnet, daß** die Laschen (16, 17) in Richtung von der Längsmittelachse des Schellenbands (1) weg umgebogen sind und die die Laschen (16, 17) aufnehmenden Löcher (18, 19) quer zur Längsrichtung des Schellenbands (1) breiter sind als das Schellenband (1) dick ist und die Laschen (16, 17) jedes Laschenpaares (16; 17) sich von ihrem Ansatz aus bis zu der Schenkelseite, auf die sie umgebogen sind, schräg zur Bandebene erstrecken.

4. Schellenband nach einem der Ansprüche 1 bis 3, **dadurch gekennzeichnet, daß** sich in einer zur Bandebene senkrechten Mittelebene des Schellenbands (1) in der Nähe der Löcher (18, 19) jedes ein Laschenpaar (16; 17) aufnehmenden Lochpaares (18; 19) eine konkave Sicke (24; 25; 26) in Längsrichtung des Schellenbands (1) erstreckt, in deren Hohlraum ein Endabschnitt (20) des zurückgebogenen Schlaufenschenkels (11) bündig eingreift.

5. Schellenband nach Anspruch 4, **dadurch gekennzeichnet, daß** sich die Sicke zwischen den Löchern (18, 19) jedes ein Laschenpaar (16; 17) aufnehmenden Lochpaares (18; 19) erstreckt und das Material des radial äußeren Schlaufenschenkels (10) bei zur Schelle geformtem Schellenband (1) neben den Längsseiten der Sicke (24; 25) radial nach innen gegenüber dem Umriß der Sicke (24; 25) und des Schellenbands (1) vorsteht, wobei es an den Querkanten (22, 23) entsprechend der Dicke des Schellenbands (1) vorsteht und von diesen Querkanten (22, 23) aus in Längsrichtung der Sicke (24; 25) in bis zu jenem Umriß abnehmendem Maße vorsteht.

6. Schellenband nach Anspruch 2, **dadurch gekennzeichnet, daß** wenigstens einer der Vorsprünge als Durchzug (30) ausgebildet ist, der auf der einen Seite des anderen Schenkels (10) vernietet oder verstemmt ist.

7. Schellenband nach Anspruch 2, **dadurch gekennzeichnet, daß** wenigstens einer der Vorsprünge (27; 29) etwa topf- oder nasenförmig ausgebildet ist.

## Claims

1. A clip band (1) of steel, having at least a pair of end portions which each have at least one closed longitudinal slot (12, 15) for passing therethrough a clamping screw (2) having a head and which are curved to form loops (9) whose limbs (10, 11) are connected close to the free end of the one limb (11) and which serve to receive a respective one of two clamping portions (5, 6) which are cylindrical over at least a part of their periphery and of which the one clamping portion (5) has an opening passing transversely therethrough without a screwthread for freely passing therethrough the screwthreaded shank (4) of the clamping screw (2) and the other clamping portion (6) has an opening passing transversely therethrough with a screwthread for engagement of the screwthreaded shank (4) of the clamping screw (2), wherein the one limb (11) of each loop (9) is provided with at least one pair of tongues (16; 17), the tongues thereof being cut free and bent out of the plane of the limb, which project through holes (18, 19) in the other limb (10) of the loop (9) and are bent over on to the one side of the other limb (10) transversely with respect to the longitudinal direction thereof and in mutually opposite relationship, **characterised in that** each loop limb end portion (20) having the tongues (16, 17) is cut back to a smaller width than the remainder (21) of the clip band (1) as far as the root of the tongues (16, 17) so that the clip band (1) has transverse edges (22, 23).

2. A clip band according to claim 1 **characterised in that** the one limb (11) of each loop (9) is provided with at least one projection (27, 29; 30) which projects out of the plane of the limb and which projects or project into a hole or holes (28) in the other limb (10) of the loop (9) and that the limb (11) of each loop (9), which has the tongues (16; 17) or additionally the projection or projections (27; 29; 30) bears against the radially inward side of the clip band (1) in an approximately circular clip.

3. A clip band according to claim 1 or claim 2 **characterised in that** the tongues (16, 17) are bent over in a direction away from the longitudinal centre line of the clip band (1) and the holes (18, 19) which accommodate the tongues (16, 17) are wider transversely with respect to the longitudinal direction of the clip band (1) than the clip band (1) is thick and the tongues (16, 17) of each pair thereof (16; 17) extend from the root thereof to the limb side on to which they are bent over inclinedly with respect to the plane of the band.

4. A clip band according to one of claims 1 to 3 **characterised in that** in a central plane of the clip band (1), which is perpendicular to the plane of the band, in the proximity of the holes (18, 19) of each pair of holes (18; 19) accommodating a pair of tongues (16; 17) extending in the longitudinal direction of the clip band (1) is a concave bead (24; 25; 26), in the hollow space of which an end portion (20) of the bent-back loop limb (11) engages in flush relationship.

5. A clip band according to claim 4 **characterised in that** the bead extends between the holes (18, 19) of each pair of holes (18; 19) accommodating a pair of tongues (16; 17) and the material of the radially outer loop limb (10), when the clip band (1) is shaped to form the clip, projects beside the longitudinal sides of the bead (24; 25) radially inwardly with respect to the contour of the bead (24; 25) and the clip band (1), wherein it projects at the transverse edges (22, 23) in a manner corresponding to the thickness of the clip band (1) and projects from said transverse edges (22, 23) in the longitudinal direction of the bead (24; 25) to a dimension which decreases to said contour.

6. A clip band according to claim 2 **characterised in that** at least one of the projections is in the form of a draw-through portion (30) which is riveted or peened on the one side of the other limb (10).

7. A clip band according to claim 2 **characterised in that** at least one of the projections (27; 29) is of a substantially pot-shaped or nose-shaped configuration.

## Revendications

1. Collier de serrage à bande (1) en acier, avec au moins une paire de portions d'extrémité, qui comprennent respectivement au moins une fente longitudinale fermée (12, 15) pour le passage d'une vis de serrage (2) comprenant une tête (3) et qui sont repliées en boucles (9), dont les branches (10, 11) sont reliées à proximité de l'extrémité libre de l'une des branches (11) et qui servent à recevoir respectivement l'un de deux éléments de serrage (5, 6) qui sont cylindriques sur au moins une partie de leur pourtour, l'un des éléments de serrage (5) comprenant une ouverture traversant dans le sens transversal sans taraudage pour permettre le passage libre de la tige filetée (4) de la vis de serrage (2) et l'autre élément de serrage (6) comprenant une ouverture traversant dans le sens transversal avec un taraudage pour permettre le vissage de la tige filetée (4) de la vis de serrage (2), l'une des branches (11) de chaque boucle (9) étant munie d'au moins une paire de languettes (16 ; 17), dont les languettes sont découpées et repliées hors du plan des branches, traversent des trous (18, 19) de l'autre branche (10) de la boucle (9) et sont repliées sur l'un des côtés de l'autre branche (10) dans le sens transversal à la direction longitudinale de celle-ci et en opposition réciproque, **caractérisé en ce que** chaque portion d'extrémité de branche de boucle (20) comprenant les languettes (16, 17) est recoupée à une largeur inférieure à celle de la partie restante (21) du collier de serrage à bande (1) jusqu'à l'embase des languettes (16, 17), de sorte que le collier de serrage à bande (1) comprend des arêtes transversales (22, 23).

2. Collier de serrage à bande selon la revendication 1, **caractérisé en ce que** l'une des branches (11) de chaque boucle (9) est munie au moins d'une saillie (27, 29 ; 30) sortant du plan de la branche, qui pénètre(nt) dans un trou ou dans des trous (28) de l'autre branche (10) de la boucle (9) et **en ce que** la branche (11) de chaque boucle (9) comprenant les languettes (16 ; 17) ou en plus la saillie ou les saillies (27 ; 29 ; 30) s'appuie du côté radial intérieur du collier de serrage à bande (1) dans une bride de fixation approximativement de forme circulaire.

3. Collier de serrage à bande selon la revendication 1 ou 2, **caractérisé en ce que** les languettes (16, 17) sont repliées dans la direction partant de l'axe médian longitudinal du collier de serrage à bande (1) et que, dans le sens transversal par rapport à la direction longitudinale du collier de serrage à bande (1), les trous (18, 19) recevant les languettes (16, 17) sont plus larges que l'épaisseur du collier de serrage à bande (1) et **en ce que** les languettes (16, 17) de chaque paire de languettes (16 ; 17) s'étendent, depuis leur embase jusqu'au côté de la branche sur lequel elles sont repliées, transversalement au plan de la bande.

4. Collier de serrage à bande selon l'une quelconque des revendications 1 à 3, **caractérisé en ce que**, dans un plan médian du collier de serrage à bande (1) perpendiculaire au plan de la bande et à proximité des trous (18, 19) de chaque paire de trous (18 ; 19) recevant une paire de languettes (16 ; 17), s'étend en direction longitudinale du collier de serrage à bande (1) un jonc concave (24 ; 25 ; 26), dans la cavité creuse duquel pénètre de manière jointive une portion d'extrémité (20) de la branché de boucle repliée (11).

5. Collier de serrage à bande selon la revendication 4, **caractérisé en ce que** le jonc s'étend entre les trous (18, 19) de chaque paire de trous (18 ; 19) recevant une paire de languettes (16 ; 17) et **en ce que**, lorsque le collier de serrage à bande (1) est formé en bride de fixation, le matériau de la branche de boucle radiale extérieure (10) s'avance, à côté des faces longitudinales du jonc (24 ; 25) dans le sens radial vers l'intérieur par rapport au contour du jonc (24, 25) et du collier de serrage à bande (1) alors qu'il dépasse des arêtes transversales (22, 23) dans une mesure correspondant à l'épaisseur du collier de serrage à bande (1) et qu'il dépasse à partir de ces arêtes transversales (22, 23) en direction longitudinale du jonc (24 ; 25), et ceci dans une mesure décroissante jusqu'à ce contour.

6. Collier de serrage à bande selon la revendication 2, **caractérisé en ce qu'**au moins une des saillies est réalisée comme élément traversant (30), qui est riveté ou maté sur l'un des côtés de l'autre branche (10).

7. Collier de serrage à bande selon la revendication 2, **caractérisé en ce qu'**au moins une des saillies (27 ; 29) est réalisée approximativement en forme de pot ou de nez.
